# EUROPÄISCHE PATENTSCHRIFT

(11) **EP 0 829 623 B1**
(45) Veröffentlichungstag und Bekanntmachung des Hinweises auf die Patenterteilung: **16.04.2003**
(21) Anmeldenummer: 97115315.0
(22) Anmeldetag: 04.09.1997
(51) Int. Cl.: F01N 3/08, F02D 21/08, B01D 53/94

(54) **NOx-Abgasreinigungsverfahren**
Process for reducing NOx emission from exhaust gases
Procédé pour éliminer les oxydes d'azote de gaz d'échappement

(30) Priorität: 11.09.1996 DE 19636790
(43) Veröffentlichungstag der Anmeldung: 18.03.1998
(73) Patentinhaber: Volkswagen Aktiengesellschaft, 38436 Wolfsburg (DE)
(72) Erfinder: Pott, Ekkehard, Dr., 38518 Gifhorn (DE)
(74) Vertreter: Schneider, Henry, Dipl.-Ing.

(56) Entgegenhaltungen:
- EP-A- 0 560 991
- EP-A- 0 580 389
- EP-A- 0 732 485
- PATENT ABSTRACTS OF JAPAN vol. 096, no. 012, 26.Dezember 1996 & JP 08 200045 A (TOYOTA MOTOR CORP), 6.August 1996, & EP 0 752 521 A (TOYOTA MOTOR CO LTD)
- PATENT ABSTRACTS OF JAPAN vol. 095, no. 011, 26.Dezember 1995 & JP 07 217473 A (TOYOTA MOTOR CORP), 15.August 1995,
- PATENT ABSTRACTS OF JAPAN vol. 096, no. 003, 29.März 1996 & JP 07 305644 A (MITSUBISHI MOTORS CORP), 21.November 1995,
- PATENT ABSTRACTS OF JAPAN vol. 096, no. 012, 26.Dezember 1996 & JP 08 196870 A (TOYOTA MOTOR CORP;TOYOTA CENTRAL RES & DEV LAB INC), 6.August 1996,
- PATENT ABSTRACTS OF JAPAN vol. 096, no. 012, 26.Dezember 1996 & JP 08 218918 A (TOYOTA MOTOR CORP), 27.August 1996,

## Beschreibung

Die Erfindung betrifft ein Abgasreinigungsverfahren für eine Brennkraftmaschine gemäß dem Oberbegriff des Patentanspruchs 1 sowie eine Brennkraftmaschine gemäß Anspruch 21.

Für Otto-Magermotoren sind NO_{X}-Speicherkatalysatoren bekannt, die im mageren Betrieb die Stickoxide zunächst bis zur von der Katalysatorauslegung abhängigen Belastungsgrenze einlagern. Anschließend erfolgt ein kurzer stöchiometrischer oder leicht fetter Betrieb zur Regeneration des NO_{X}-Speicherkatalysators, mit nachfolgend wieder magerer Betriebsweise. Der Rückhaltegrad dieser NO_{X}-Speicherkatalysatoren ist sehr hoch, die gesamte NO_{X}-Reduktion mit Speicherentladung und NO_{X}-Umsetzung bei λ ≤ 1 beträgt bei Mager-Ottomotoren im Neuzustand > 90 %. Prinzipiell sind solche NO_{X}-Speicherkatalysatoren auch bei Dieselfahrzeugen einsetzbar, wobei eine gewisse größere Dimensionierung zur Kompensation der SO_{X}-Einlagerungen vorteilhaft ist. Im Gegensatz zu Ottomotoren arbeiten Dieselmotoren jedoch stets mit Luftüberschuß, so daß während allen Betriebszuständen λ > 1 ist. Eine Beladung des NO_{X}-Speicherkatalysators wäre somit zwar problemlos möglich, eine Regeneration durch Anfetten des Abgases mittels beispielsweise Einspritzung von Kraftstoff in den Abgasstrang würde aber einerseits zu einem nicht tolerierbaren Verbrauchsanstieg und andererseits, wegen des hohen Sauerstoffgehalts der Dieselabgase, zu einer hohen Oxidationswärme führen, da vor der Umsetzung des gespeicherten NO_{X} der eingedüste Kraftstoff oxidiert wird. Hierdurch besteht die Gefahr einer Zerstörung des Katalysators.

Die JP 08 200 045 A beschreibt ein Verfahren zur Regeneration eines einer direkteinspritzenden Brennkraftmaschine nachgeschalteten NO_{X}-Absorbers, wobei eine NO_{X}-Speicherbeladung des Absorbers unter Verwendung last- und drehzahlabhängiger Kennfelder kontinuierlich modelliert wird. Die Regeneration des NO_{X}-Absorbers mit einem fetten oder stöchiometrischen Luft-Kraftstoff-Gemisch wird zwangseingeleitet, wenn die ermittelte NOₓ-Beladung einen maximal zulässigen Wert erreicht. Um Zündprobleme während der Regeneration zu vermeiden, werden unterschiedliche Strategien zur Steuerung von Abgasrückführrate, Drosselklappe, und Kraftstoffnacheinspritzung vorgeschlagen.

Aus der DE 43 42 062 A ist eine Abgasreinigungsvorrichtung für Dieselbrennkraftmaschinen bekannt, bei der der NO_{X}-Speicher zur Regeneration vom Abgasstrom abgesperrt wird. Dies geschieht regelmäßig dann, wenn der Speicher seine Kapazität erreicht hat. Um während der Regeneration weiterhin keine NOₓ-Emissionen zu haben, wird der Abgasstrom über einen zweiten NOₓ-Speicher geführt. Alternativ wird der Abgasstrom gedrosselt und ein komplizierter Regenerationalgorithmus eingeleitet. Hierbei ist die Funktionssicherheit problematisch. Außerdem bedingt die Verdoppelung des NOₓ-Speichers einen erheblichen Aufwand, wobei trotz des Aufwands nur bedingt eine gute Abgasreinigung erreicht wird.

Aus der US 4,755,499 ist die reversible Speicherung von Stickoxiden und Schwefeloxiden z. B. aus Abgasen von Kraftfahrzeugen bekannt, wobei der Absorber durch Erhitzen in einer reduzierenden Atmosphäre regeneriert wird. Hierbei tritt gleichzeitig eine Reduktion der Stickoxide ein.

Ein solcher Speicherkatalysator ist in der EP 0 580 389 A für den Einsatz bei Kraftfahrzeugen näher beschrieben, wobei auch hier hohe Temperaturen (über 500 °C) für die Regeneration des Absorbers notwendig sind. Hierdurch ist der Einsatz des Speicherkatalysators nur bei Kraftfahrzeugen möglich, die eine hohe Abgastemperatur haben, d. h. insbesondere bei Kraftfahrzeugen mit einem Otto-Motor. Jedoch ist auch hier der Einsatz nur bedingt möglich, da unter bestimmten Betriebsbedingungen der Verbrennungskraftmaschine, wie sie beispielsweise im Stadtverkehr gegeben sind, durch die Beschleunigungsphasen ein hoher Stickoxidausstoß erfolgt, nicht jedoch eine hohe Temperatur erreicht wird, die für die Regeneration des Absorbers, insbesondere von Schwefeloxiden, erforderlich ist.

Aus der EP 0 560 991 A ist ein Otto-Motor mit einem Speicherkatalysator sowie je einem vor- und nachgeschalteten Dreiwegekatalysator bekannt. Durch die motomahe Anordnung des dem Absorber vorgeschalteten Dreiwegekatalysators heizt sich dieser nach einem Kaltstart des Otto-Motors sehr schnell auf, so daß er frühzeitig seine katalytische Aktivität erreicht. Nach Erreichen seiner katalytischen Aktivität setzt der vorgeschaltete Dreiwegekatalysator die während der Warmlaufphase der Ottobrennkraftmaschine vermehrt vorliegenden HC und CO um, wobei gleichzeitig NO_{X} reduziert wird. Hierdurch wird erreicht, daß während einer Warmlaufphase der Ottobrennkraftmaschine eine NO_{X}-Reduktion im Abgas stattfindet, obwohl der NO_{X}-Speicher noch nicht die für die Speicherung von NO_{X} notwendige Temperatur erreicht hat. Diese Anordnung und Verfahrensweise ist nur bei OttoMotoren sinnvoll, da Diesel-Motoren auch während der Warmlaufphase nicht genügend CO und HC emittieren, um den NO_{X}-Anteil der Abgase genügend zu reduzieren. Abgesehen von der besseren Abgasreinigung während der Warmlaufphase zeigt der Otto-Motor mit Vorkatalysator keine verbesserte NO_{X}-Reduktion. Des weiteren sind aus dieser Veröffentlichung zwei Verfahren zur NO_{X}-Reduktion bei Dieselbrennkraftmaschinen bekannt, die zum einen auf einer Drosselung der Luftzufuhr zu der Dieselbrennkraftmaschine und zum anderen auf einer Kraftstoffeindüsung beruhen. Dieselbrennkraftmaschinen, die mit solchen NO_{X}-Speichern ausgerüstet sind, zeigen jedoch bei höheren Abgastemperaturen eine deutliche Abnahme der NO_{X}-Speicherung im NO_{X}-Speicher.

All diesen Ausführungen ist gemeinsam, daß insbesondere bei direkteinspritzenden Brennkraftmaschinen und/oder Dieselbrennkraftmaschinen das Fettfahren der Brennkraftmaschine für eine Regeneration des NO_{X}-Speichers oftmals problematisch ist. So kann hierbei die Temperatur der Abgase einerseits zu hoch sein, andererseits kann ein zu hoher Leistungsabfall die Folge sein.

Aufgabe der vorliegenden Erfindung ist es, ein Verfahren zum Betrieb einer Brennkraftmaschine mit einem Absorber für Stickoxide zur Verfügung zu stellen, bei dem eine Sauerstoffabsenkung im Abgas zur Regeneration des NO_{X}-Speichers ohne eine Gefahr der Überhitzung der Abgase und/oder mit einer verringerten Leistungseinbuße möglich sein soll. Mit zur Aufgabe gehört außerdem eine entsprechende Brennkraftmaschine.

Bei dem eingangs beschriebenen Verfahren wird diese Aufgabe gelöst mit den kennzeichnenden Maßnahmen des Anspruchs 1, hinsichtlich der Brennkraftmaschine wird die Aufgabe gelöst mit den Merkmalen gemäß Anspruch 21.

Die Unteransprüche zeigen bevorzugte Ausführungsformen, mit denen insbesondere auch bei sehr niedrigen Abgastemperaturen, wie sie beispielsweise bei direkteinspritzenden Verbrennungskraftmaschinen vorliegen, ein früher Einsatz der Absorberfunktion nach einem Kaltstart möglich ist. Außerdem wird mit den Unteransprüchen auch bei unterschiedlichen Betriebsbedingungen der Brennkraftmaschine eine komfortable Regeneration des NO_{X}-Speichers erreicht.

Bei dem erfindungsgemäßen Abgasreinigungsverfahren erfolgt im Gegensatz zum Stand der Technik nicht bloß eine einfache Abfrage der Speicherbeladung oder eines Zeitablaufs, wobei bei Erreichen einer bestimmten Speicherbeladung bzw. nach einem vorgegebenen Zeitablauf eine Regeneration des NOx-Speichers erfolgt. Vielmehr wird erfindungsgemäß eine Abfrage des Zustandes der Brennkraftmaschine durchgeführt, wobei die Regeneration (d. h. Einstellen der zweiten Betriebsbedingungen) gezielt dann erfolgt, wenn eine niedrige Belastung und/oder eine Schubphase und/oder eine Leerlaufphase der Brennkraftmaschine vorliegt. Besonders vorteilhaft ist die Regeneration im Schubbetrieb, gefolgt vom Leerlaufbetrieb und geringer vorteilhaft bei der niedrigen Belastung der Brennkraftmaschine. Im Schubbetrieb der Brennkraftmaschine kann die Regeneration ohne jegliche Komforteinbußen erfolgen, da hier der Brennkraftmaschine keine Leistung abverlangt wird. Auch im Leerlaufbetrieb ist das Einstellen der zweiten Betriebsbedingungen relativ unproblematisch, da hier der Brennkraftmaschine ebenfalls keine Vortriebsleistung abverlangt wird; durch das Einstellen der zweiten Betriebsbedingungen kann es jedoch zu einer leichten Veränderung der Leerlaufdrehzahl der Brennkraftmaschine kommen. Auch bei niedrigen Leistungen der Brennkraftmaschine ist noch eine komfortable Regeneration des NOx-Speichers möglich, da mit dem Vorliegen der zweiten Betriebsbedingungen noch niedrige Leistungswerte der Brennkraftmaschine eingestellt werden können, so daß auch hier praktisch kein für den Fahrer eines Kraftfahrzeuges merklicher Leistungseinbruch der Brennkraftmaschine vorliegt.

Entsprechend der oben genannten vorteilhaften Rangfolge der einzelnen Phasen der Brennkraftmaschine beim Erstellen der zweiten Betriebsbedingungen, kann das Einstellen der zweiten Betriebsbedingungen hinsichtlich der einzelnen Phasen auch gewichtet werden. So kann beispielsweise der Regeneration eine Zeitsteuerung und/oder eine Abhängigkeit vom NOx-Ausstoß der Brennkraftmaschine (d.h. dem NOx-Speichergrad des NOx-Speichers) überlagert werden. Dies bedeutet, daß die zweiten Betriebsbedingungen nur dann eingestellt werden, wenn die ersten Betriebsbedingungen eine bestimmte, vorgegebene Zeit vorlagen bzw. wenn eine bestimmte prozentuale Speicherbelegung vorliegt. Hierbei kann wiederum die Zeitspanne oder die prozentuale NOx-Belegung des NOx-Speichers für den Schubbetrieb geringer sein, als bei den anderen Betriebsphasen der Brennkraftmaschine.

Je nach Einsatz eines Kraftfahrzeugs mit dem erfindungsgemäßen Abgasreinigungsverfahren ist es möglich, daß die Regeneration des NOx-Speichers ausschließlich in Schub-, Leerlauf- und Teillastphasen erfolgen kann. Sofern jedoch langanhaltende Hochlastphasen der Brennkraftmaschine vorliegen, z. B. bei einer Autobahnfahrt, kann ggf. auch eine Regeneration außerhalb der günstigen Betriebszustände erfolgen, wenn der NOx-Speicher eine bestimmte NOx-Belegung, von beispielsweise ≥ 80 % und insbesondere ≥ 90 % erreicht hat. Hierbei kann es jedoch je nach Art der Brennkraftmaschine und der zweiten Betriebsbedingungen zu einem spürbaren Abfall der Leistung der Brennkraftmaschine kommen.

Als niedrige Belastung der Brennkraftmaschine gilt vorteilhaft eine Belastung bis 20 % der Nennleistung der Brennkraftmaschine und insbesondere bis 10 % der Nennleistung (der nominalen maximalen Leistung (kW oder PS)), alternativ oder zusätzlich 20 % bzw. 10 % des nominalen maximalen Drehmoments (Nennlast). Außerdem wird während den zweiten Betriebsbedingungen vorteilhaft die Luftzufuhr zu der Brennkraftmaschine vermindert, insbesondere durch eine Drosselung im Luftansaugkanal. Dies ist bei fremdzündenden wie auch selbstzündenden Brennkraftmaschinen möglich, wobei das erfindungsgemäße Verfahren wiederum insbesondere bei selbstzündenden Brennkraftmaschinen besonders vorteilhaft anwendbar ist, ohne daß ein zweiter NOx-Speicher für einen Wechselbetrieb vorgesehen werden muß, wie es aus der DE 43 42 062 bekannt ist.

Bei dem erfindungsgemäßen Abgasverfahren an einer Brennkraftmaschine werden die Abgase der Brennkraftmaschine einem NOx-Speicher zugeführt, der unter ersten Betriebsbedingungen NOx aus dem zugeführten Abgas speichert. Die ersten Betriebsbedingungen sind insbesondere solche, bei denen im Abgas nettooxidierende Bedingungen (λ > 1 und insbesondere λ > 1,1) vorliegen, wobei die Temperatur des Abgasstroms oberhalb 150 °C und insbesondere oberhalb 200 °C liegen soll. Unter zweiten Betriebsbedingungen, die von den ersten Betriebsbedingungen unterschiedlich sind, gibt der NOx-Speicher das gespeicherte NOx wieder ab, wobei dieses insbesondere unmittelbar bzw. sofort reduziert wird. Die zweiten Betriebsbedingungen sind insbesondere solche, bei denen das Abgas eine für die Reduktion der gespeicherten Stickoxide ausreichende Menge an Reduktionsmittel mit sich führt. Dies ist insbesondere bei einem λ (stöchiometrisches Luft-Kraftstoff-Verhältnis) ≤ 1,05 und insbesondere λ ≤ 1,0 der Fall.

Das erfindungsgemäße Verfahren ist vorteilhaft mit einer Abgasrückführung ausgestattet, die entsprechend den ersten bzw. den zweiten Betriebsbedingungen unterschiedliche Abgasrückführungsraten hat. Die Abgasrate kann hier außerdem noch, auch unter den zweiten Betriebsbedingungen, lastabhängig verändert werden.

In einer ersten Ausführungsform, die ganz besonders vorteilhaft ist, wird bei einem Wechsel von einer ersten Betriebsbedingung (Magerbetrieb der Brennkraftmaschine) in eine zweite Betriebsbedingung (Regenerieren des NOx-Speichers) das Volumenverhältnis rückgeführter Abgasstrom : Ansaugluft vergrößert, so daß der Sauerstoffanteil im Brennraum der Brennkraftmaschine stark zurückgeht. Dem Anstieg des prozentualen Volumenanteils des rückgeführten Abgasstroms an der gesamt Ansaugmenge sind Grenzen gesetzt, einerseits, daß überhaupt noch eine Verbrennung des Kraftstoffes in dem Brennraum der Brennkraftmaschine stattfinden kann, und andererseits durch eine Rußentstehung. Je nach Betriebsbedingungen der Brennkraftmaschine kann jedoch der Volumenanteil des rückgeführten Abgasstromes bis zu 90 % betragen, im Regelfall bis 80 %. Andererseits ist der prozentuale Volumenanteil des rückgeführten Abgasteilstromes vorteilhaft nicht zu gering, damit eine deutliche Reduzierung des Sauerstoffanteils im Brennraum erreicht wird. So sollte der Abgasanteil 15 % und insbesondere 30 % nicht unterschreiten. Am günstigsten liegt der Abgasanteil im Brennraum bei 40 bis 70 %.

Durch die Anhebung des Abgasanteils bei der Verbrennung wird erreicht, daß für die Regeneration des Speichers keine oder nur eine geringere Androsselung notwendig wird, um zu der reduzierten Sauerstoffmenge im Verbrennungsraum zu kommen. Dies ist insbesondere bei Dieselbrennkraftmaschinen besonders vorteilhaft, da hier ein fettes Gemisch sich bislang - auch bei einer Androsselung der Luftzufuhr - kaum einstellen ließ.

Die Anhebung der Abgasrückführungsrate (EGR) erfolgt ganz besonders vorteilhaft in einem unteren Teillastbereich der Brennkraftmaschine, insbesondere unterhalb 20 % der Nennleistung der Brennkraftmaschine. Ganz besonders wirksam ist diese Art der Abgasrückführungsregelung bei einer Belastung der Brennkraftmaschine bis 10 % der Nennleistung. Bei höheren Lasten der Brennkraftmaschine kann hingegen eine Verringerung der rückgeführten Abgasmenge sinnvoll sein, insbesondere um einem Leistungsabfall der Brennkraftmaschine entgegenzuwirken.

Der zuletzt beschriebene Aspekt führt zu einer zweiten Ausführungsform, bei der bei einem Wechsel von einer ersten Betriebsbedingung zu einer zweiten Betriebsbedingung die rückgeführte Abgasmenge vermindert wird. Dies erfolgt gleichzeitig beim Einsatz einer Luftzufuhrverminderung zu der Brennkraftmaschine, so daß insgesamt der Füllungsgrad der Brennräume der Brennkraftmaschine zurückgenommen wird. Das zweite erfindungsgemäße Verfahren zeichnet sich dadurch aus, daß der Leistungseinbruch, der durch die Reduzierung der Frischluftzufuhr zu der Brennkraftmaschine erfolgt, nicht so ausgeprägt vorliegt. Dies ist wiederum insbesondere bei Dieselbrennkraftmaschinen besonders vorteilhaft.

Zusätzlich zur EGR kann die NOx-Reduzierung erheblich gesteigert werden, wenn dem NOx-Speicher stromaufwärts im Abgasstrom ein Konverter vorgeschaltet wird, der bei einer Temperatur ≥ 230 °C mindestens 50 % des im Abgasstrom enthaltenen NO zur NO₂ umsetzt. Vorzugsweise erreicht der Konverter diesen Umsetzungsgrad bereits bei einer Temperatur ≥ 200 °C und insbesondere bei der Temperatur ≥ 180 °C. Üblicherweise erreichen solche Konverter eine mindestens 90-%ige Umsetzung des NO bei einer Temperatur ≥ 250 °C.

Alternativ, aber insbesondere zusätzlich wird mit dem Konverter ein in den Abgasen der Brennkraftmaschine vorliegendes NO₂/NO-Verhältnis vergrößert, wodurch dem nachfolgenden Speicher insbesondere in der Warmlaufphase der Brennkraftmaschine weniger NO zugeführt wird.

Für solche NOx-Behandlungen eignen sich alle Verfahren, die eine Vergrößerung des NO₂-Anteils an den Stickoxiden bewirken, beispielsweise elektrische Entladungen im Abgassystem, bevorzugt Barriereentladungen, sowie katalytische Verfahren, insbesondere Oxidationskatalysatoren. Unter diesen sind insbesondere Oxidationskatalysatoren mit einem Element der Platingruppe und hier wiederum Platin selbst besonders bevorzugt. Solche Katalysatoren sind prinzipiell als Abgasnachbehandlungskatalysatoren für Brennkraftmaschinen bekannt.

Vorteilhaft ist der Konverter nahe am Abgasauslaß der Brennkraftmaschine angeordnet, d. h. vorteilhaft in einem Abstand ≤ 1 m und insbesondere in einem Abstand ≤ 70 cm.

Besonders vorteilhaft ist der Konverter als Metallkonverter ausgeführt, d. h. der Träger für die katalytisch wirksame Schicht wird aus einer Metallfolie hergestellt. Bevorzugt wird hierbei eine Metallfolie mit einer Dicke von ≤ 50 µm und insbesondere mit einer Dicke von ≤ 40 µm eingesetzt, wodurch ein besonders schnelles Aufheizen des Konverters auf seine Betriebstemperatur gewährleistet ist. Außerdem hat es sich erfindungsgemäß herausgestellt, daß der Konverter vorzugsweise ein Gesamtvolumen von 10 bis 25 % und insbesondere von 15 bis 20 % des Motorhubraums der Brennkraftmaschine aufweist, da sich bei diesem Verhältnis optimale NOx-Reinigungswerte erzielen lassen. Weiterhin hat der Konverter vorzugsweise eine Platinbeladung von ≥ 60 g/ft³. Der Absorptionsspeicher hat hingegen vorteilhaft eine niedrigere Platinbelegung, d. h. insbesondere mit ≤ 50 g/ft³ Platin.

Erfindungsgemäß können die üblichen absorbierenden Materialien eingesetzt werden, wie sie beispielsweise in der US 4,755,499, aber auch in der EP 0 580 389 A oder WO 94-04258 beschrieben sind. All diesen Speichermaterialien ist gemeinsam, daß sie eine erhöhte Arbeitstemperatur haben, wobei insbesondere beim Regenerieren (insbesondere beim Entfernen der Schwefeloxide) eine noch höhere Temperatur erforderlich ist. Bei den meisten Speichermedien dieser Art werden Temperaturen im Bereich von 150 °C bis 700 °C, insbesondere Temperaturen oberhalb 300 °C benötigt.

Die bevorzugten NOx-Speichermaterialien zeichnen sich also dadurch aus, daß sie unter nettooxidierenden Bedingungen (stöchiometrischer Überschuß an Oxidationsmitteln), wie sie im Abgas vorliegen, Stickoxide zwischenspeichern und bei einer Verringerung des Sauerstoffüberschusses reduzieren können. Hierzu sind die NOx-Speicherkatalysatoren üblicherweise auch edelmetallbeschichtet, insbesondere mit den üblichen Edelmetallbeschichtungen für Dreiwegekatalysatoren. Die Regeneration des mit NOx beladenen Speichermaterials erfolgt dann vorteilhaft bei λ ≤ 1 in einer Regenerierphase.

Üblicherweise laufen an den NOx-Speicherkatalysatoren verschiedene Reaktionen nacheinander bis gleichzeitig ab, wobei die wichtigsten Reaktionen
- Oxidation des NO im Abgas zur NO₂
- Speicherung des NO₂ als Nitrat
- Zersetzung des Nitrats
- Reduktion des zurückgebildeten NO₂ zu Stickstoff und Sauerstoff
sind.

Wie oben beschrieben, ist der Verlauf der Reaktionen unter anderem abhängig von der Temperatur des Katalysators, aber auch von der Konzentration der Reaktionspartner am aktiven Zentrum des Katalysators und der Strömungsgeschwindigkeit des Gases.

Mit verschiedenen Faktoren, die miteinander kombinierbar sind, ist es auch mit nur geringem Aufwand möglich, den Abgasabsorber zu optimieren, insbesondere für direkteinspritzende Dieselkraftmaschinen. Die wesentlichen Merkmale sind hierbei:
- Verringerung der Wandstärke des Trägerkörpers, auf dem die Absorptionsschicht aufgebracht ist, auf ≤ 160 µm, insbesondere ≤ 140 µm;
- Verwendung von Metallträgern, vorteilhaft mit einer Wandstärke ≤ 50 µm, vorzugsweise ≤ 40 µm und insbesondere ≤ 30 µm; und/oder
- Heizen des Absorbers auf eine Temperatur oberhalb der Temperatur des Abgasstromes.

Es hat sich gezeigt, daß bei der Verwendung dünnwandiger keramischer Träger für die Absorptionsschicht, d. h. insbesondere von Trägerkörpern mit einer Wandstärke ≤ 0,14 mm, nicht nur ein schnellerer Temperaturanstieg der Absorptionsschicht möglich ist, sondern auch eine dickere Absorptionsschicht eingesetzt werden kann. Hierdurch wird zweierlei erreicht: zum einen können auch kurze Hochtemperaturphasen zum Regenerieren ausgenutzt werden, da die Speicherschicht schneller die höhere Temperatur annimmt, und zum anderen kann durch Auftragen einer dickeren Absorptionsschicht eine höhere Speicherkapazität erreicht werden, so daß über die längere Speicherfähigkeit des Absorbers beim Betrieb der Verbrennungskraftmaschine eine längere Zeitspanne verstreichen kann, bis der Speicher zu Regenerieren ist, so daß trotz der seltener auftretenden Temperaturspitzen im Abgasstrom von verbrauchsoptimierten Verbrennungskraftmaschinen kein Durchschlagen des Speichers (Erreichen der Sättigungsgrenze) erfolgt.

Insbesondere Absorber mit einem Trägerkörper aus Metallfolie sind geeignet, wobei die Metallfolie vorteilhaft noch als Widerstandsheizung geschaltet werden kann, so daß auch bei niedrigen Abgastemperaturen der Absorber auf die notwendige Regenerationstemperatur durch Leiten eines elektrischen Stromes durch den Metallträgerkörper gebracht werden kann. Außerdem lassen sich bei der Verwendung eines Metallträgerkörpers die Kanäle, die mit der Absorptionsschicht beschichtet sind, unterschiedlich gestalten, so daß beispielsweise eine Verwirbelung (turbulente Strömung) des Abgasstromes in den Kanälen gezielt einstellbar ist.

Für die Erzielung besonders guter Umsätze hat die Absorptionsschicht eine vergrößerte Oberfläche von mindestens 20 m²/g, insbesondere mindestens 40 m²/g. Vorteilhaft hat die Absorptionsschicht vorzugsweise ein Porenvolumen von mindestens 0,2 cm³/g und insbesondere mindestens 0,4 cm³/g, wobei auch eine bimodale Porengrößenverteilung geeignet ist mit Mikroporen und Makroporen. Dies wird beispielsweise durch die Wahl einer bestimmten Partikelgröße für die Bildung der Absorberoberfläche erreicht, wobei auch Mischungen oder bestimmte Verteilungen unterschiedlicher Partikelgrößen geeignet sind.

Als Absorptionsoberfläche eignet sich insbesondere γ-Aluminiumoxid, das mit einem oder mehreren Elementen aus der Gruppe der Alkalimetalle, Erdalkalimetalle, seltenen Erden und/oder Lanthan beladen ist. Auch Kupfer und Mangan sind geeignete Elemente. Die Elemente liegen üblicherweise als Oxid, aber auch als Carbonat oder Nitrat vor, wobei die Speicherwirkung durch Bildung entsprechender Nitrate und Sulfate erzielt wird, die dann unter den entsprechenden Reaktionsbedingungen wieder zu Oxiden oder Carbonaten überführt werden. Hierdurch ist es möglich, NOx und/oder SOx insbesondere aus einem Abgas, das mindestens 1 % Sauerstoff enthält, zu absorbieren.

Wie beschrieben, werden die absorbierten Stoffe insbesondere durch erhöhte Temperaturen und in reduzierender Atmosphäre wieder freigesetzt. Hierzu ist es vorteilhaft, wenn im Abgas die Sauerstoffkonzentration ermittelt wird, wobei dann die Sauerstoffkonzentration oder eine mit der Sauerstoffkonzentration in bekannter Beziehung stehende Größe zur Steuerung des Absorptions- bzw. Desorptionsvorganges herangezogen werden kann. Entsprechendes gilt auch für die Temperatur des Abgasstroms, wobei entscheidend die Temperatur der Absorptionsschicht ist, die unmittelbar oder mittelbar bestimmt wird. So kann die Temperatur beispielsweise durch Messung der Temperatur des Abgasstroms bzw. des Trägerkörpers gemessen werden; auch eine Temperaturbestimmung über ein Kennfeld der Verbrennungskraftmaschine ist möglich.

Vorzugsweise werden die Absorptionsschichten in einer Dicke von mindestens 50 µm, insbesondere mindestens 70 µm und besonders vorteilhaft mindestens 90 µm hergestellt (durchschnittliche Schichtdicke eines Querschnitts; Werte gelten für Keramik, bei Metall gelten die halben Werte) wobei sich diese Schichtdicke der Absorptionsschicht über vorzugsweise mindestens 50 % und insbesondere mindestens 80 % des Absorbers erstreckt. Solche Schichtdicken ermöglichen gegenüber den herkömmlichen Absorbern eine höhere Speicherkapazität und damit die oben beschriebenen längeren Intervalle bis zur Regeneration.

Da für die Freisetzung und Umsetzung des NOx aus dem Speicher und die Freisetzung der Schwefeloxide aus dem Speicher unterschiedliche Temperaturen notwendig sind (beim letzteren höhere), kann außerdem so verfahren werden, daß eine Desorption der Schwefeloxide (die insbesondere als Sulfat vorliegen) in größeren Zeitspannen bzw. bei Bedarf vorgenommen wird, so daß der Speicher nur gelegentlich auf die hohen Temperaturen erhitzt wird, die für eine Desorption der Schwefeloxide notwendig sind. Auch hierdurch wird einer frühzeitigen Alterung des Speichers entgegengewirkt, so daß eine besonders gute Langzeitstabilität des Absorbers erreicht wird.

Die mit zur Erfindung gehörende Brennkraftmaschine mit einer Abgasreinigung enthält vorteilhaft die oben beschriebenen Merkmale.

Die Erfindung wird im folgenden anhand eines Ausführungsbeispiels und Zeichnungen näher beschrieben.

Es zeigen:
- Figur 1: eine Dieselbrennkraftmaschine mit Abgasreinigung und Abgasrückführung; und
- Figur 2: ein Blockschaltbild zur Regeneration eines NOx-Speicherkatalysators.

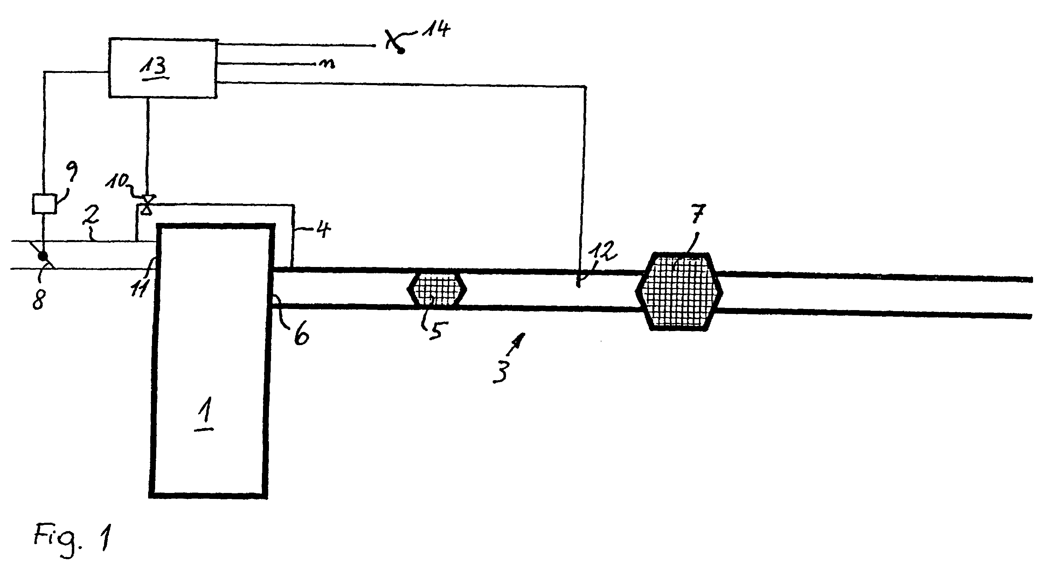

Die in der Figur 1 dargestellte Brennkraftmaschine 1 (1,9 I, 4 Zyl., Dieseldirekteinspritzer, 66 kW) hat einen Lufteinlaßkanal 2 und eine Abgasanlage 3. Von der Abgasanlage 3 führt eine Abgasrückführungsleitung 4 zu dem Lufteinlaßkanal 2, mittels der insgesamt eine Reduzierung der NOx-Rohemissionen erfolgt.

In der Abgasanlage 3 ist motornah ein Konverter 5 angeordnet, der ein Volumen von 15 % des Hubraums der Dieselbrennkraftmaschine 1 hat. Der Abstand zwischen dem Abgasauslaß 6 und dem Konverter 5 beträgt ca. 20 cm. Außerdem ist in der Abgasanlage 3 ca. 70 cm nach dem Konverter 5 ein üblicher NOx-Speicherkatalysator 7 angeordnet, nach dem die Abgase ins Freie gelangen.

Der Konverter 5 hat einen Metallfolienträgerkörper, auf dem ein γ-Aluminiumoxid-washcoat mit einer Platinbeladung von 70 g/ft³ aufgetragen ist. Der NO_{X}-Speicherkatalysator ist aus einem wabenförmigen Keramikträger aufgebaut, auf dem ein γ-Aluminiumoxid-washcoat mit Barium, Lanthan und Natrium aufgebracht ist. Außerdem hat der Speicherkatalysatorwashcoat eine Platinbeladung von 46 g/ft³.

In dem Lufteinlaßkanal 2 ist stromauf der Einmündung der Abgasrückführungsleitung 4 eine Drosselklappe 8 angeordnet, die mittels eines Stellmotors 9 zu öffnen und verschließbar ist.

In der Abgasrückführungsleitung 4 sitzt ein Stellventil 10, über das die von der Abgasanlage 3 zu dem Lufteinlaß 11 der Brennkraftmaschine 1 zurückgeführte Abgasmenge kontrollierbar ist.

Ferner ist vor dem NOx-Speicher 7 in die Abgasanlage 3 eine Breitbandlambdasonde 12 eingeführt, über die ermittelbar ist, ob das Abgas in der Abgasanlage 3 sauerstoffhaltig, ausgeglichen oder fett ist. Die Signale der Breitbandlambdasonde 12 werden einer Steuerung 13 zugeführt, die wiederum den Stellmotor 9 der Lufteinlaßdrossel 8 und das Stellventil 10 in der Abgasrückführung 4 ansteuert. Ferner erhält die Steuerung 13 weitere motorrelevante Werte, wie die Drehzahl n und einen Lastwert, beispielsweise von einem Fahrpedal 14.

Im Normalbetrieb der Brennkraftmaschine 1 ist die Drosselklappe 8 voll geöffnet und (bei einer Abgastemperatur ca. ≥ 150 °C) der NOx-Speicher 7 speichert im wesentlichen NO₂ ein, das in den Abgasen der Brennkraftmaschine 1 vorliegt bzw. in dem Konverter 5 durch Oxidation von NO aus dem Abgas erhalten wurde. Während des Betriebs der Brennkraftmaschine unter den ersten Betriebsbedingungen (lean) werden von der Steuerung 13 über ein Kennfeld und die eingehenden Motordaten die Stickoxidwerte des Abgasstroms und damit eine Stickoxidbelegung des NOx-Speichers 7 ermittelt. Bei Eintreten einer der Bedingungen Schub, Leerlauf oder unterer Teillastbereich und Erreichen einer ca. 20-%igen (bei Schub oder Leerlauf) und ca. 50-%igen (beim unteren Teillastbereich) Belegung des NOx-Speichers 7 mit NO₂ erfolgt über die Steuerung 13 eine Regeneration des NOx-Speichers 7. Hierzu wird die Drosselklappe 8 teilweise geschlossen, so daß die Frischluftzufuhr zu dem Lufteinlaß 11 stark verringert ist. Gleichzeitig wird das Stellventil 10 geöffnet, so daß eine hohe Abgasrückführungsrate erreicht wird. Hierdurch wird erreicht, daß die Brennkraftmaschine mit einem Luftunterschuß (fett) fährt, wofür ggf. auch die Kraftstoffeinspritzmenge in den Brennraum der Brennkraftmaschine 1 erhöht werden kann.

Die in der Regenerationsphase (zweiten Betriebsbedingungen) ggf. noch im Abgasstrom vorliegenden Sauerstoffreste werden an dem Konverter 5 mit den in dem Abgasstrom vorliegenden HC- und CO-Emissionen umgesetzt, so daß am Eingang des NOx-Speichers 7 (kontrolliert über die Breitbandlambdasonde 12) ein sauerstoffreies Abgas zur Verfügung steht. Insbesondere mit den in dem Abgasstrom noch vorliegenden CO-Emissionen, aber auch mittels der HC-Reste, werden die im NOx-Speicher 7 eingelagerten Stickoxide auf dem Edelmetall des NOx-Speichers umgesetzt. Nach wenigen Sekunden ist der NOx-Speicher 7 regeneriert, so daß die Steuerung 13 die Drosselklappe 8 und das Stellventil 10 wieder in die Position für die ersten Betriebsbedingungen zurückstellt.

Durch die Erhöhung der EGR wird erreicht, daß keine Überhitzung der Abgase der Brennkraftmaschine stattfindet, wodurch zum einen der Konverter 5 und der NOx-Speicher 7 geschont werden und zum anderen eine verringerte Kraftstoffmenge für die Regeneration des NOx-Speichers 7 notwendig ist.

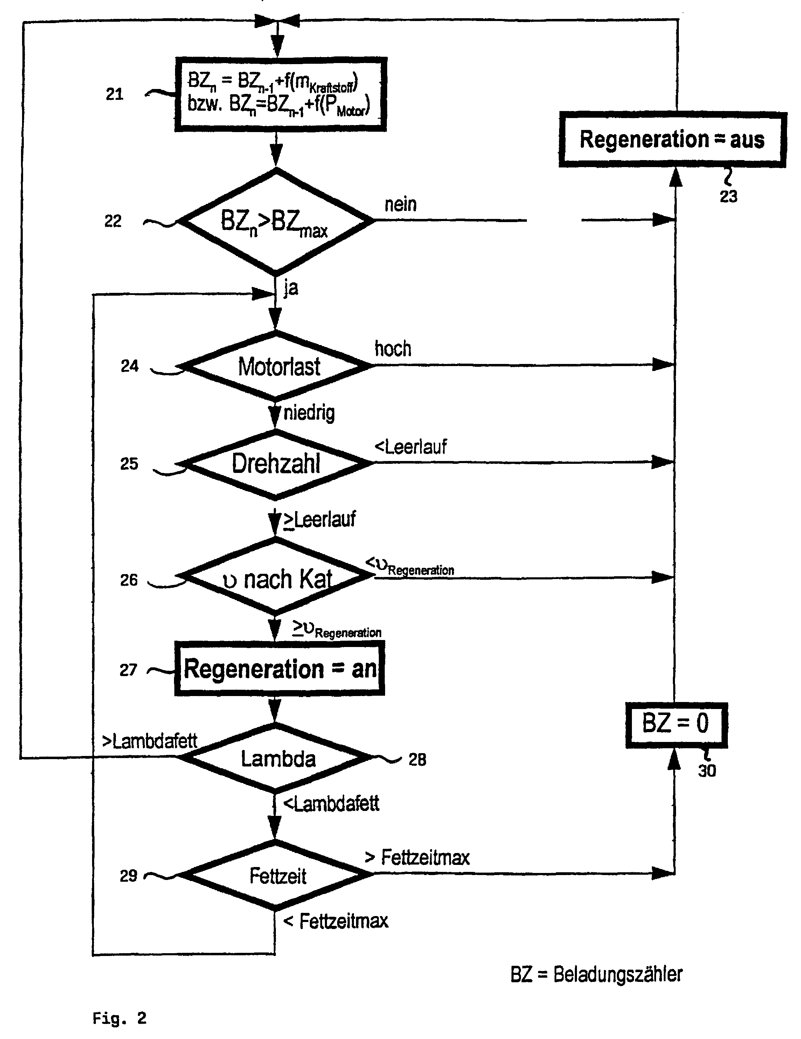

Der oben beschriebene Regenerationsablauf ist in der Figur 2 näher ausgeführt. Die Entscheidung, wann eine Regeneration einzuleiten ist, richtet sich im wesentlichen nach den Parametern
- NOx-Beladung des Speichers,
- Betriebszustand des Motors,
- Temperatur des NOx-Speichers.

Nach einer Speicherregeneration wird zunächst ein Beladungszähler 21 auf Null (30) gesetzt. Die NOx-Wiederbeladung des entleerten NOx-Speichers 7 kann durch das Differenzsignal je eines NOx-Sensors vor und hinter dem NOx-Speicher direkt erfaßt werden oder indirekt, dafür weniger aufwendig, näherungsweise durch Auswertung der Motorbetriebsdaten. Gemäß der EP 0 560 991 kann der Beladungszustand auch aus den kumulierten Motorumdrehungen seit der letzten Regeneration abgeleitet werden, vorteilhaft ist jedoch die Erfassung der kumulierten Motorleistung, die ihrerseits aus der Gaspedalstellung und der Motordrehzahl n ermittelt werden kann. Etwas weniger genau ist auch die Aufsummierung der seit der letzten Regeneration vom Motor verbrauchten Kraftstoffmenge möglich. Da die NOx-Einlagerungsrate des NOx-Speichers im wesentlichen auch durch die Speichertemperatur, die über einen-Temperaturfühler im Abgasstrom oder im Speicher oder auch durch ein Kennfeld ermittelt werden kann, und die Raumgeschwindigkeit, die sich näherungsweise aus der Drehzahl und der eingespritzten Kraftstoffmenge errechnen läßt, bestimmt wird, sind diese Werte bei der Berechnung der NOx-Speicherbeladung mitzuberücksichtigen. Eine Abweichung von bis zu ± 30 % von der tatsächlichen Gesamtbeladung ist hierbei tolerierbar, da die Einlagerungsfähigkeit des NOx-Speichers mit zunehmender Gesamtbeladung zunächst nur wenig abnimmt und eine Regeneration eines nur ca. ¾-vollen Speichers keine wesentlichen Nachteile mit sich bringt.

Durch Abfrage 22 des Beladungszustandes BZ des NOx-Speichers wird bei einem geringen Beladungszustand weiterhin im ersten Betriebszustand "Regeneration = aus" 23 verfahren. Erst wenn ein vorgegebener maximaler Beladungszustand überschritten ist, wird die Motorlast 24 abgefragt. Wenn hierbei eine Nullstellung des Fahrpedals 14 erkannt wird, wird als nächstes die Drehzahl 25 abgefragt. Sofern eine Motorlast vorliegt, wird die Schleife über "Regeneration = aus" 23 und die Abfrage des Beladungszustands 22 erneut gefahren, wobei mit zunehmender Beladung des NOx-Speichers 7 auch eine zunehmende Motorlast als "niedrig" eingestuft wird, so daß ein voller Speicher 7 auch bei einer höheren Motorlast regeneriert wird. Diese Abfrage wird durchgeführt, da mit der Regeneration, beispielsweise durch eine Androsselung der Luftzufuhr, der Erhöhung der EGR-Rate und/oder eine höhere Einspritzmenge, ein Leistungseinbruch der Brennkraftmaschine 1 einhergeht. Deswegen soll die Regeneration möglichst bereits bei bis zu mittleren Teillasten durchgeführt werden.

Mit der Drehzahlabfrage 25 soll ein Absterben des Motors bei einer Drehzahl kleiner der Leerlaufdrehzahl verhindert werden. Sofern auch die Drehzahl n des Motors 1 genügend hoch ist, wird zur Temperaturabfrage 26 weitergeschaltet. Da die Speicherregeneration auf eine Temperatur angewiesen ist, bei der CO mit NO₂ an dem Edelmetall des Speichers reagiert, soll die Speichertemperatur oberhalb dieser Reaktionsschwelle von ca. 180 °C liegen. Je nach Speichermaterial kann die Mindesttemperatur auch einen anderen Wert haben.

Sind alle genannten Kriterien erfüllt, wird die Regeneration durch Drosseln 8 und/oder durch Öffnen des EGR-Ventils 10 und/oder durch Anheben der Einspritzmenge eingeleitet 27. Gleichzeitig erfolgt über die Lambdasonde 12 eine Abfrage 28, ob das Abgas fett ist, wofür noch eine gewisse Zeit vergeht. Solange die Abfrage 28 ein Lambda oberhalb "fett" ergibt, erfolgt eine weitere Aufsummierung der NOx-Werte des Abgas bei 21 mit einer entsprechenden Abfragefolge. Wird das Abgas an der Lambdasonde 12 als "fett" erkannt, kann von einer Regeneration des Speichers 7 ausgegangen werden. Die Regeneration kann bei Unterschreiten einer als "sicher fett" geltenden Lambdaschwelle nach Verstreichen einer Regenerationszeit 29 beendet werden, vor Ablauf der Fettzeit wird der Abfragezyklus bei der Motorlast 24 beginnend wiederholt. Nach Ablauf der Fettzeit wird der Beladungszähler 21 wieder auf Null 30 gesetzt.

Ein sicheres Erkennen eines fetten Abgases liegt bei Lambda ca. ≤ 0,9, möglich sind Werte <1,05 bis hin zu 0,6. Für die Errechnung der Regenerationszeit ist die Beladung des Speichers und das Reduktionsmittelangebot entscheidend. Bei der Speicherregeneration im Fetten ist CO die Hauptreduktionskomponente, wobei für die Umsetzung von 1 mol NO₂ 2 mol CO erforderlich sind entsprechend 1,22 g CO pro Gramm eingelagertes NO₂.

Abhängig vom CO-Angebot des auf ein kleines Lambda gedrosselten Motors läßt sich somit die erforderliche Mindestregenerationszeit (Fettzeit max.) errechnen. Mit steigender Androsselung nimmt auch das CO-Angebot des Motors zu und die Mindestregenerationszeit ab. Die Mindestregenerationszeit kann zur Gewährleistung einer vollständigen Speicherentleerung noch um vorzugsweise bis zu 50 %, vorteilhaft um 20 % bis 40 % und insbesondere ca. 30 % nach oben korrigiert werden. Je nach verwendeter Brennkraftmaschine und dem im Abgas vorliegenden Reduktionsmittelprofil (HC, CO, H₂), der Speichertemperatur, der Raumgeschwindigkeit, dem Speichermedium, dem Washcoat, den Anströmverhältnissen und dem Katalysatorvolumen kann ein Zeit-Korrekturfaktor - 50 % bis + 300 % betragen. Der Zeitkorrekturfaktor ist entsprechend experimentell zu ermitteln.

Vorzugsweise kann bei den Abfragen eine Hysterese aufgesetzt sein, um ein häufiges Hinund Herschalten zwischen den Zuständen "Regeneration an" und "Regeneration aus" zu vermeiden. Die Hysterese kann vorteilhaft bei der Motorlast, der Drehzahl und der Speichertemperatur vorliegen. Das Maß der Überschneidung richtet sich hier wiederum nach den vorliegenden Fahrzeugkonfigurationen und kann vorteilhaft beispielsweise ± 5 % vom Sollwert betragen, wobei bis zu ± 30 % möglich sind.

## Patentansprüche

1. Abgasreinigungsverfahren bei einer Brennkraftmaschine (1), bei dem die Abgase der Brennkraftmaschine (1) einem NO_{X}-Speicher (7) zugeführt werden, der geeignet ist, unter ersten Betriebsbedingungen NO_{X} aus dem zugeführten Abgas zu speichern, und der unter zweiten Betriebsbedingungen das gespeicherte NO_{X} zur Reduktion desselben wieder freisetzt, wobei unter den zweiten Betriebsbedingungen der NO_{X}-Speicher (7) nicht oder zu höchstens 50 % von dem Abgasstrom abgesperrt wird und wobei die zweiten Betriebsbedingungen eingestellt werden,
(a) wenn eine niedrige Belastung und/oder eine Schubphase und/oder eine Leerlaufphase der Brennkraftmaschine (1) vorliegt und
der NO_{X}-Speicher (7) eine vorgegebene NO_{X}-Speicherbelegung (BZₘₐₓ) erreicht hat (NO_{X}-speicherbeladungsgesteuert) oder die ersten Betriebsbedingungen eine vorgegebene Zeit vorlagen (zeitgesteuert), und
(b) auch außerhalb einer niedrigen Belastung oder einer Schubphase oder einer Leerlaufphase der Brennkraftmaschine (1), wenn der NO_{X}-Speicher (7) einen bestimmten Füllgrad erreicht hat, der größer als die vorgegebene NO_{X}-Speicherbelegung (BZₘₐₓ) ist.

2. Verfahren nach Anspruch 1, **dadurch gekennzeichnet, daß** für die Phasen der Brennkraftmaschine (1), niedrige Belastung, Schubphase und/oder Leerlaufphase, bei denen die zweiten Betriebsbedingungen gezielt eingestellt werden, unterschiedliche Vorgaben für die vorgegebene NO_{X}-Speicherbelegung (BZₘₐₓ) oder die für das Vorliegen der ersten Betriebsbedingungen vorgegebene Zeit gemacht werden.

3. Verfahren nach einem der vorhergehenden Ansprüche, **dadurch gekennzeichnet, daß** die zweiten Betriebsbedingungen andauern, bis die Schubphase, die Leerlaufphase oder die Phase niedriger Belastung der Brennkraftmaschine (1) beendet ist oder, sofern dies eher eintritt, bis der NO_{X}-Speicher (7) regeneriert ist.

4. Verfahren nach einem der vorhergehenden Ansprüche, **dadurch gekennzeichnet, daß** die niedrige Belastung der Brennkraftmaschine (1) bei einer Leistungsabgabe der Brennkraftmaschine (1) unterhalb 20 %, insbesondere unterhalb 10 % der Nennleistung der Brennkraftmaschine (1) vorliegt.

5. Verfahren nach einem der vorhergehenden Ansprüche, **dadurch gekennzeichnet, daß** über eine Abgasrückführung ein Teilstrom der Abgase dem Luftansaugtrakt der Brennkraftmaschine (1) zugeführt wird unter Bildung eines Abgasteilstrom/Ansaugluft-Verhältnisses unter den ersten Betriebsbedingungen, und daß das Abgasteilstrom/Ansaugluft-Verhältnis unter den zweiten Betriebsbedingungen vergrößert wird.

6. Verfahren nach Anspruch 5, **dadurch gekennzeichnet, daß** die Vergrößerung des Abgasteilstrom/Ansaugluft-Verhältnisses nur in einem unteren Teillastbereich der Brennkraftmaschine (1) erfolgt.

7. Verfahren nach einem der vorhergehenden Ansprüche, **dadurch gekennzeichnet, daß** unter den zweiten Betriebsbedingungen die Verbrennungsluftzufuhr zu der Brennkraftmaschine (1) vermindert wird.

8. Verfahren nach Anspruch 7, **dadurch gekennzeichnet, daß** über eine Abgasrückführung ein Teilstrom der Abgase dem Luftansaugtrakt der Brennkraftmaschine (1) zugeführt wird unter Bildung eines Abgasteilstrom/Ansaugluft-Verhältnisses unter den ersten Betriebsbedingungen, und daß mit der Verminderung der Verbrennungsluftzufuhr unter den zweiten Betriebsbedingungen auch die rückgeführte Abgasmenge vermindert wird.

9. Verfahren nach einem der vorhergehenden Ansprüche, **dadurch gekennzeichnet, daß** die Brennkraftmaschine (1) eine Kraftstoffdirekteinspritzung besitzt.

10. Verfahren nach einem der vorhergehenden Ansprüche, **dadurch gekennzeichnet, daß** die Brennkraftmaschine (1) eine Dieselbrennkraftmaschine ist.

11. Verfahren nach einem der vorhergehenden Ansprüche, **dadurch gekennzeichnet, daß** das Abgas, bevor es dem NO_{X}-Speicher (7) unter den ersten Betriebsbedingungen zugeführt wird, durch einen Konverter geleitet wird, in dem ein in den Abgasen vorliegendes NO₂/NO-Verhältnis vergrößert wird und/oder in dem bei einer Temperatur ≥ 230 °C mindestens 50 % des im Abgas enthaltenen und mit dem Abgas in den Konverter geführten NO zu NO₂ umgesetzt wird.

12. Verfahren nach einem der vorhergehenden Ansprüche, **dadurch gekennzeichnet, daß** die Reduktion des gespeicherten NO_{X} bei einem λ ≤ 1,05 erfolgt.

13. Verfahren nach einem der vorhergehenden Ansprüche, **dadurch gekennzeichnet, daß** der NO_{X}-Speicher (7) ein Aluminiumoxid, insbesondere γ-Aluminiumoxid enthält.

14. Verfahren nach einem der vorhergehenden Ansprüche, **dadurch gekennzeichnet, daß** der NO_{X}-Speicher (7) ein Element aus der Gruppe der Alkalimetalle, Erdalkalimetalle, seltenen Erden, Lanthan, Titan, Kupfer und/oder Mangan enthält.

15. Verfahren nach einem der vorhergehenden Ansprüche, **dadurch gekennzeichnet, daß** der NO_{X}-Speicher (7) NO_{X} und SO_{X} aus dem Abgas bei Sauerstoffüberschuß absorbiert.

16. Verfahren nach einem der vorhergehenden Ansprüche, **dadurch gekennzeichnet, daß** der NO_{X}-Speicher (7) NO_{X} und/oder SO_{X} in einer reduzierten Atmosphäre und/oder bei niedriger Sauerstoffkonzentration freisetzt.

17. Verfahren nach Anspruch 15 und/oder 16, **dadurch gekennzeichnet, daß** eine Sauerstoffkonzentrations-Bestimmungseinrichtung, die die Sauerstoffkonzentration bzw. eine die Sauerstoffkonzentration enthaltende Größe ermittelt, vorgesehen ist, die die Sauerstoffkonzentration bzw. die diese enthaltende Größe als eine Eingangsgröße an die Steuerung gibt, die die ersten oder zweiten Betriebsbedingungen einstellt.

18. Verfahren nach einem der vorhergehenden Ansprüche, **dadurch gekennzeichnet, daß** der NO_{X}-Speicher (7) NO_{X} und/oder SO_{X} bei erhöhter Temperatur freisetzt.

19. Verfahren nach Anspruch 18, **gekennzeichnet durch** eine Temperatur-Bestimmungseinrichtung, die die Temperatur bzw. eine die Temperatur enthaltende Größe des Gasstroms und/oder des NO_{X}-Speichers ermittelt und die die Temperatur bzw. die diese enthaltende Größe als Eingangsgröße an die Steuerung gibt, die die ersten oder zweiten Betriebsbedingungen einstellt.

20. Verfahren nach Anspruch 17 und 19, **dadurch gekennzeichnet, daß** die Steuerung die Sauerstoffkonzentration und die Temperatur bzw. die diese enthaltenden Größen als Eingangsgrößen hat.

21. Brennkraftmaschine (1) mit einer Abgasanlage, die einen NO_{X}-Speicher (7) enthält, in dem unter ersten Betriebsbedingungen NO_{X} aus einem zugeführten Abgas der Brennkraftmaschine (1) speicherbar ist und aus dem unter zweiten Betriebsbedingungen das gespeicherte NO_{X} zur Reduktion desselben wieder freisetzbar ist, wobei keine oder eine höchstens 50%ige Absperrung des NO_{X}-Speichers (7) vom Abgasstrom unter den zweiten Betriebsbedingungen vorgesehen ist, und mit einer Steuerung (13), mit der eine Einstellung der zweiten Betriebsbedingungen durchführbar ist,
(a) bei Vorliegen einer niedrigen Belastung und/oder einer Schubphase und/oder einer Leerlaufphase der Brennkraftmaschine (1) und
bei Erreichen einer vorgegebenen NO_{X}-Speicherbelegung (BZₘₐₓ) des NO_{X}-Speichers (7) (NO_{X}-speicherbeladungsgesteuert) oder Vorliegen der ersten Betriebsbedingungen für eine vorgegebene Zeit (zeitgesteuert), und
(b) auch außerhalb einer niedrigen Belastung oder einer Schubphase oder einer Leerlaufphase der Brennkraftmaschine (1) bei Erreichen eines bestimmten Füllgrades des NO_{X}-Speichers (7), der größer als die vorgegebene NO_{X}-Speicherbelegung (BZₘₐₓ) ist.

22. Brennkraftmaschine (1) nach Anspruch 21, **dadurch gekennzeichnet, daß** vor dem Lufteinlaß der Brennkraftmaschine (1), insbesondere stromaufwärts der Einmündung der Abgasrückführung, eine Drossel angeordnet ist, mittels der eine zu dem Lufteinlaß der Brennkraftmaschine (1) strömende Luftmenge veränderbar ist.

23. Brennkraftmaschine (1) nach Anspruch 21 oder 22, **dadurch gekennzeichnet, daß** zwischen dem NO_{X}-Speicher (7) und einem Abgasauslaß der Brennkraftmaschine (1) ein Konverter angeordnet ist, der ein Gesamtvolumen im Bereich von 10 bis 25 % des Hubraums der Brennkraftmaschine (1) hat, und daß der Konverter mit mindestens 60 g/ft³ Platin belegt ist.

24. Brennkraftmaschine (1) nach einem der Ansprüche 21 bis 23, **dadurch gekennzeichnet, daß** die Brennkraftmaschine (1) ein Direkteinspritzer ist.

25. Brennkraftmaschine (1) nach einem der Ansprüche 21 bis 24, **dadurch gekennzeichnet, daß** die Brennkraftmaschine (1) eine Dieselbrennkraftmaschine ist.

## Claims

1. Exhaust-gas-cleaning process for a combustion engine (1), wherein the exhaust gases from the combustion engine (1) are fed into a NOₓ storage catalyst (7), which is suitable, under primary operating conditions, for storage of NOₓ from the supplied exhaust gas, and which, under secondary operating conditions, releases the stored NOₓ for reduction of the same, wherein, under the secondary operating conditions, the NOₓ storage catalyst (7) is either not blocked from the exhaust-gas flow or is blocked from the exhaust-gas flow by a maximum of 50%, and wherein the secondary operating conditions are set,
(a) when the combustion engine (1) is in a low-load phase and/or an overrun phase and/or an idling phase and
when the NOₓ storage catalyst (7) has reached a predetermined maximum NOₓ storage-catalyst charge (BZₘₐₓ) (NOₓ-charge-controlled), or when the primary operating conditions have been present for a predetermined time (time-controlled), and
(b) even outside a low-load phase or an overrun phase or an idling phase of the combustion engine (1), whenever the NOₓ storage catalyst (7) has reached a given filling level, which is greater than the predetermined maximum NOₓ storage-catalyst charge (BZₘₐₓ).

2. Process according to claim 1, **characterised in that** for the low-load phase, overrun-phase and/or idling phase of the combustion engine (1), in which the secondary operating conditions are specifically set, different specifications are given for the predetermined maximum NOₓ storage-catalyst-charge (BZₘₐₓ) or for the time specified for the duration of the primary operating conditions.

3. Process according to any one of the preceding claims, **characterised in that** the secondary operating conditions endure until the overrun phase, the idling phase or the low-load phase of the combustion engine (1) has ended or, until the NOₓ storage catalyst (7) has regenerated, if this occurs sooner.

4. Process according to any one of the preceding claims, **characterised in that** the combustion engine (1) is in a low-load phase when the power delivery of the combustion engine (1) is below 20%, in particular, below 10% of the nominal power of the combustion engine (1).

5. Process according to any one of the preceding claims, **characterised in that** a partial flow of exhaust gases is supplied to the air-intake tract of the combustion engine (1) via an exhaust-gas recirculation system, thereby creating an exhaust-gas-partial-flow/intake-air ratio under the primary operating conditions, and that the exhaust-gas-partial-flow/intake-air ratio is increased under the secondary operating conditions.

6. Process according to claim 5, **characterised in that** the exhaust-gas-partial-flow/intake-air ratio is increased only within a low partial-loading range of the combustion engine (1).

7. Process according to any one of the preceding claims, **characterised in that** under the secondary operating conditions, the supply of combustion air to the combustion engine (1) is reduced.

8. Process according to claim 7, **characterised in that** a partial flow of exhaust gases is supplied to the air-intake tract of the combustion engine (1) via an exhaust gas recirculation system thereby creating an exhaust-gas-partial-flow/intake-air ratio under the primary operating conditions, and that with the reduction in the supply of combustion air under the secondary operating conditions, the quantity of recirculated exhaust is also reduced.

9. Process according to any one of the preceding claims, **characterised in that** the combustion engine (1) possesses a direct fuel-injection system.

10. Process according to any one of the preceding claims, **characterised in that** the combustion engine (1) is a diesel combustion engine.

11. Process according to any one of the preceding claims, **characterised in that** before being supplied to the NOₓ storage catalyst (7) under the primary operating conditions, the exhaust gas is fed through a converter, in which an existing NO₂/NO ratio in the exhaust gases is increased and/or in which, at a temperature ≥ 230°C, at least 50% of the NO contained in the exhaust gas and fed into the converter is converted into NO₂.

12. Process according to any one of the preceding claims, **characterised in that** the reduction of the stored NOₓ takes place with a λ-value ≤ 1.05.

13. Process according to any one of the preceding claims, **characterised in that** the NOₓ storage catalyst (7) contains an aluminium oxide, in particular, γ-aluminium oxide.

14. Process according to any one of the preceding claims, **characterised in that** the NOₓ storage catalyst (7) contains an element from the group of alkaline metals, earth-alkaline metals, rare earths, lanthanum, titanium, copper and/or manganese.

15. Process according to any one of the preceding claims, **characterised in that** the NOₓ storage catalyst (7) absorbs NOₓ and SOₓ from the exhaust gas in the presence of an excess of oxygen.

16. Process according to any one of the preceding claims, **characterised in that** the NOₓ storage catalyst (7) releases NOₓ and/or SOₓ in a reduced atmosphere and/or with a low oxygen concentration.

17. Process according to claim 15 and/or 16, **characterised in that** a device is provided for determining the oxygen concentration, which determines the oxygen concentration or a value containing the oxygen concentration, and which supplies the oxygen concentration and/or the value containing the latter as an input parameter to the control unit, which sets the primary or secondary operating conditions.

18. Process according to any one of the preceding claims, **characterised in that** the NOₓ storage catalyst (7) releases NOₓ and/or SOₓ at increased temperatures.

19. Process according to claim 18, **characterised by** a temperature-determining device, which determines the temperature of the gas flow and/or a parameter containing the temperature of the gas flow and/or of the NOₓ storage catalyst and which communicates the temperature and/or the parameter containing the latter as an input parameter to the control unit, which sets the primary or secondary operating conditions.

20. Process according to claims 17 and 19, **characterised in that** the control unit has the oxygen concentration and the temperature or parameters containing the latter as input parameters.

21. Combustion engine (1) with an exhaust system, which contains an NOₓ storage catalyst (7), in which under the primary operating conditions, NOₓ from a supply of exhaust gas from the combustion engine (1) can be stored, and from which, under secondary operating conditions, the stored NOₓ can be released again for the reduction of the same, wherein either no blocking or a maximum of 50% blocking of the NOₓ storage catalyst (7) from the exhaust-gas flow is provided under the secondary operating conditions, and with a control unit (13), with which the secondary operating conditions can be set,
(a) when the combustion engine (1) is in a low-load phase and/or an overrun phase and/or an idling phase and
the NOₓ storage catalyst (7) has reached a predetermined maximum NOₓ storage-catalyst charge (BZₘₐₓ) (NOₓ-charge-controlled) or the primary operating conditions have been present for a predetermined time (time-controlled), and
(b) even outside a low-load phase or an overrun phase or an idling phase of the combustion engine (1), whenever the NOₓ storage catalyst (7) has reached a given filling level, which is greater than the predetermined maximum NOₓ storage-catalyst charge (BZₘₐₓ).

22. Combustion engine (1) according to claim 21, **characterised in that** before the air intake of the combustion engine (1), especially upstream of the opening for the exhaust gas recirculation, a throttle is arranged, by means of which a quantity of air flowing towards the air intake of the combustion engine (1) can be altered.

23. Combustion engine (1) according to claim 21 or 22, **characterised in that** between the NOₓ storage catalyst (7) and an exhaust-gas outlet of the combustion engine (1), a converter is arranged, which has a total volume within the range of 10 to 25% of the piston capacity of the combustion engine (1), and that the converter is charged with at least 60g/ft³ platinum.

24. Combustion engine (1) according to any one of claims 21 to 23, **characterised in that** the combustion engine (1) is a direct-injection engine.

25. Combustion engine (1) according to any one of claims 21 to 24, **characterised in that** the combustion engine (1) is a diesel-combustion engine.

## Revendications

1. Procédé de purification des gaz d'échappement d'un moteur à combustion interne (1), dans lequel les gaz d'échappement du moteur à combustion interne (1) sont amenés dans un dispositif de stockage de NOₓ (7) qui est approprié pour stocker, dans des premières conditions d'exploitation, des NOₓ issus des gaz d'échappement amenés, et qui, dans des secondes conditions d'exploitation, libère à nouveau le NOₓ stocké pour une réduction de celui-ci, où, dans les secondes conditions d'exploitation, le dispositif de stockage de NOₓ (7) n'est pas bloqué ou est au plus bloqué à 50 % par le flux de gaz d'échappement et où les secondes conditions d'exploitation sont ajustées,
(a) lorsqu'une faible charge et/ou une phase de poussée et/ou une phase de marche au ralenti du moteur à combustion interne (1) existe, et que le dispositif de stockage de NOₓ (7) a atteint une charge de stockage des NOₓ prédéfinie (BZₘₐₓ) (commande par charge de stockage des NOₓ) ou que les premières conditions d'exploitation existent depuis une durée prédéfinie (commande par durée), et
(b) même en-dehors d'une faible charge ou d'une phase de poussée ou d'une marche au ralenti du moteur à combustion interne (1), lorsque le dispositif de stockage de NOₓ (7) a atteint un degré de remplissage déterminé qui est supérieur à la charge de stockage des NOₓ prédéfinie (BZₘₐₓ)

2. Procédé selon la revendication 1, **caractérisé en ce que**, pour les phases du moteur à combustion interne (1), faible charge, phase de poussée et/ou phase de marche au ralenti, dans lesquelles les secondes conditions d'exploitation sont ajustées de façon ciblée, des spécifications différentes sont données pour la charge de stockage des NOₓ prédéfinie (BZₘₐₓ) ou la durée prédéfinie pour l'existence des premières conditions d'exploitation.

3. Procédé selon l'une des revendications précédentes, **caractérisé en ce que** les secondes conditions d'exploitation durent jusqu'à ce que la phase de poussée, la phase de marche au ralenti ou la phase de faible charge du moteur à combustion interne (1) soit terminée, ou, dans la mesure où cela se produit avant, jusqu'à ce que le dispositif de stockage de NOₓ (7) soit régénéré.

4. Procédé selon l'une des revendications précédentes, **caractérisé en ce que** la faible charge du moteur à combustion interne (1) existe lorsqu'une puissance débitée du moteur à combustion interne (1) inférieure à 20%, en particulier inférieure à 10 % de la puissance nominale du moteur à combustion interne (1) existe.

5. Procédé selon l'une des revendications précédentes, **caractérisé en ce que**, via un recyclage des gaz d'échappement, un flux partiel des gaz d'échappement est amené dans le canal d'aspiration d'air du moteur à combustion interne (1), en formant un rapport entre flux partiel des gaz d'échappement et air aspiré dans les premières conditions d'exploitation, et **en ce que** le rapport entre flux partiel des gaz d'échappement et air aspiré est augmenté dans les secondes conditions d'exploitation.

6. Procédé selon la revendication 5, **caractérisé en ce que** l'augmentation du rapport entre flux partiel des gaz d'échappement et air aspiré ne se produit que dans une gamme de charge partielle inférieure du moteur à combustion interne (1).

7. Procédé selon l'une des revendications précédentes, **caractérisé en ce que**, dans les secondes conditions d'exploitation, l'apport en air de combustion vers le moteur à combustion interne (1) est réduit.

8. Procédé selon la revendication 7, **caractérisé en ce que**, via un recyclage des gaz d'échappement, un flux partiel des gaz d'échappement est amené dans le canal d'aspiration d'air du moteur à combustion interne (1), en formant un rapport entre flux partiel des gaz d'échappement et air aspiré dans les premières conditions d'exploitation, et **en ce que**, avec la réduction de l'apport d'air de combustion dans les secondes conditions d'exploitation, la quantité de gaz d'échappement recyclés est également réduite.

9. Procédé selon l'une des revendications précédentes, **caractérisé en ce que** le moteur à combustion interne (1) possède une injection directe de carburant.

10. Procédé selon l'une des revendications précédentes, **caractérisé en ce que** le moteur à combustion interne (1) est un moteur à combustion interne diesel.

11. Procédé selon l'une des revendications précédentes, **caractérisé en ce que** les gaz d'échappement, avant d'être amenés dans le dispositif de stockage de NOₓ (7) dans les premières conditions d'exploitation, sont dirigés à travers un convertisseur dans lequel un rapport NO₂/NO existant dans les gaz d'échappement est augmenté et/ou dans lequel, à une température ≥ 230 °C, au moins 50 % du NO contenu dans les gaz d'échappement et amené dans le convertisseur avec les gaz d'échappement sont convertis en NO₂.

12. Procédé selon l'une des revendications précédentes, **caractérisé en ce que** la réduction du NOx stocké est réalisée lorsque λ ≤ 1,05.

13. Procédé selon l'une des revendications précédentes, **caractérisé en ce que** le dispositif de stockage de NOₓ (7) contient un oxyde d'aluminium, en particulier un oxyde de γ-aluminium.

14. Procédé selon l'une des revendications précédentes, **caractérisé en ce que** le dispositif de stockage des NOₓ (7) contient un élément issu du groupe des métaux alcalins, des métaux alcalino-terreux, des terres rares, du lanthane, du titane, du cuivre et/ou du manganèse.

15. Procédé selon l'une des revendications précédentes, **caractérisé en ce que** le dispositif de stockage de NOₓ (7) absorbe NOₓ et SOₓ des gaz d'échappement en cas d'excès d'oxygène.

16. Procédé selon l'une des revendications précédentes, **caractérisé en ce que** le dispositif de stockage de NOₓ (7) libère NOₓ et/ou SOₓ dans une atmosphère réduite et/ou en cas de plus faible concentration en oxygène.

17. Procédé selon la revendication 15 ou 16, **caractérisé en ce qu'**est prévu un dispositif de détermination de la concentration en oxygène, qui détermine la concentration en oxygène ou une grandeur contenant la concentration en oxygène, qui communique au dispositif de commande la concentration en oxygène ou une grandeur la contenant sous la forme d'une valeur d'entrée, lequel dispositif de commande règle les premières ou les secondes conditions d'exploitation.

18. Procédé selon l'une des revendications précédentes, **caractérisé en ce que** le dispositif de stockage de NOx (7) libère NOₓ et/ou SOₓ à une température élevée.

19. Procédé selon la revendication 18, **caractérisé par** un dispositif de détermination de la température, qui détermine la température, ou une grandeur contenant la température, du flux de gaz et/ou du dispositif de stockage de NOₓ, et qui communique au dispositif de commande la température ou la grandeur la contenant en tant que valeur d'entrée, lequel dispositif de commande règle les premières ou secondes conditions d'exploitation.

20. Procédé selon la revendication 17 et 19, **caractérisé en ce que** le dispositif de commande dispose, comme valeurs d'entrée, de la concentration en oxygène et de la température, ou de grandeurs les contenant.

21. Moteur à combustion interne (1) présentant un système d'échappement, qui contient un dispositif de stockage de NOx (7), dans lequel le NOₓ issu des gaz d'échappement amenés du moteur à combustion interne (1) peut être stocké dans des premières conditions d'exploitation, et depuis lequel, dans des secondes conditions d'exploitation, le NOₓ stocké peut être à nouveau libéré pour une réduction de celui-ci, aucun blocage du dispositif de stockage des NOₓ (7) par les gaz d'échappement n'étant prévu dans les secondes conditions d'exploitation, ou un blocage au plus égal à 50 %, et présentant un dispositif de commande (13) grâce auquel un réglage des secondes conditions d'exploitation peut être réalisé,
(a) s'il existe une faible charge et/ou une phase de poussée et/ou une phase de marche au ralenti du moteur à combustion interne (1), et lorsque le dispositif de stockage de NOₓ (7) atteint une charge de stockage des NOₓ prédéfinie (BZₘₐₓ) (commande par charge de stockage des NOₓ) ou que les premières conditions d'exploitation existent pendant une durée prédéfinie (commande par durée), et
(b) même en-dehors d'une faible charge ou d'une phase de poussée ou d'une marche au ralenti du moteur à combustion interne (1), lorsque le dispositif de stockage de NOₓ (7) atteint un degré de remplissage déterminé qui est supérieur à la charge de stockage des NOₓ prédéfinie (BZₘₐₓ).

22. Moteur à combustion interne (1) selon la revendication 21, **caractérisé en ce que**, avant l'admission d'air du moteur à combustion interne (1), en particulier en amont de l'embouchure du recyclage des gaz d'échappement, est disposé un papillon au moyen duquel il est possible de modifier une quantité d'air s'écoulant vers l'admission d'air du moteur à combustion interne (1).

23. Moteur à combustion interne (1) selon la revendication 21 ou 22, **caractérisé en ce qu'**entre le dispositif de stockage de NOₓ (7) et une sortie des gaz d'échappement du moteur à combustion interne (1) est disposé un convertisseur qui présente un volume total compris dans la gamme allant de 10 à 25 % de la cylindrée du moteur à combustion interne (1), et **en ce que** le convertisseur est chargé avec au moins 60 g/pied³ de platine.

24. Moteur à combustion interne (1) selon l'une des revendications 21 à 23, **caractérisé en ce que** le moteur à combustion interne (1) est un moteur à injection directe.

25. Moteur à combustion interne (1) selon l'une des revendications 21 à 24, **caractérisé en ce que** le moteur à combustion interne (1) est un moteur à combustion interne diesel.
